# EUROPEAN PATENT APPLICATION

(11) **EP 1 884 596 A2**
(43) Date of publication of application: **06.02.2008**
(21) Application number: 07113312.8
(22) Date of filing: 27.07.2007
(51) Int. Cl.: E01C 13/08, A01G 1/00, A01G 9/02

(54) **Panel with natural grass**

(30) Priority: 04.08.2006 IT MI20061582
(71) Applicant: Preformati B.M.C. S.R.L., 24040 Filago (IT)
(72) Inventor: LOCATELLI, Luciano, 24040, FILAGO (BG) (IT)
(74) Representative: Giambrocono, Alfonso

(57) **Abstract**

A grass-laden panel (1, 101) comprising a support (2) with an upper surface (3) presenting a plurality of growth holes (4, 5, 6) divided by separation elements (7), said holes containing earthy material (8) and branching roots (9) of natural grass (10) which is arranged to sprout from the upper surface (3) of the support (2).

## Description

The present invention relates to a grass-laden panel comprising a support and natural grass.

Synthetic panels comprising synthetic grass are produced in the known art. These panels are used for playing fields, for example football pitches or tennis courts, or for ornamental purposes. Grass-laden panels have been recently introduced comprising a cloth carrying very dispersed synthetic grass and soil, on which natural grass grows. In addition to retaining the soil, the branching roots of the natural grass intermingle about the tufts of synthetic grass to provide a certain adherence of the grass mantle to the underlying cloth.

This adherence is however rather poor and insufficient to form good-performance playing fields.

Another problem is that if this grass-laden cloth is arranged on too hard a surface, for example of concrete, the cloth does not have the softness characteristics necessary for certain games.

A further problem is that rain water or the irrigation water for the natural grass remains largely on the upper surface of the cloth, to drench the overlying soil.

An object of the present invention is therefore to provide a grass-laden panel which enables the aforesaid drawbacks to be overcome, a particular object being to provide a grass-laden panel with good natural grass adherence.

Another object is to provide a grass-laden panel of the desired softness and hence suitable to be laid on hard surfaces, for example of concrete.

A further object is to provide a grass-laden panel which enables the water falling on its surface to drain.

Said objects are attained by a grass-laden panel the inventive characteristics of which are defined in the claims.

The invention will be more apparent from the ensuing detailed description of two preferred embodiments of the invention, which are provided by way of non-limiting example and are illustrated in the accompanying drawings, in which:
Figure 1 is a perspective view of a blanket with a plurality of growth holes;
Figure 2 is a plan view of a blanket portion with some hexagonal growth holes;
Figure 3 is a cross-section through a first embodiment of the grass-laden panel with through growth holes;
Figure 4 is a cross-section through a second embodiment of the grass-laden panel with growth holes and longitudinal holes.

From the figures it can be seen that the grass-laden panel 1 according to the invention comprises a support 2 with an upper surface 3 presenting a plurality of substantially transverse growth holes 4, 5, 6 divided by separation elements 7. Said separation elements 7 consist of the support material between one growth hole and the next. Said support preferably comprises a plastic blanket 2 or mesh. Earthy material 8 is present in the growth holes 4, 5, 6 and on the upper surface 3 of the blanket. Natural grass, sown in the earthy material 8, grows therein and sprouts or is able to sprout from the upper surface 3 of the blanket. Its roots 9 branch into the earthy material 8 within the growth holes 4, 5 and 6 to retain the earthy material 8 within the growth holes 4, 5 and 6. At least some of said branching roots 9 also extend from one growth hole to another by passing below said separation elements 7, to hence contribute to anchoring the earthy material to the blanket 2.

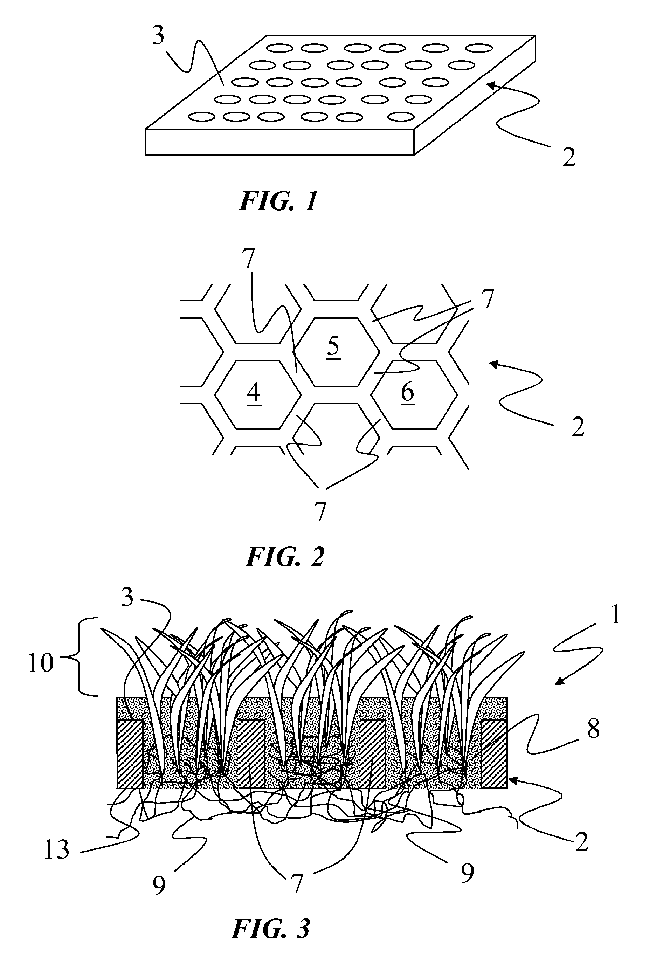

Figure 1 shows the blanket with an upper surface 3 presenting a plurality of growth holes. The growth holes are shown here as of approximately circular shape, but they can be of any shape.

Figure 2 shows a plan view of a portion of blanket 2 with some hexagonally shaped growth holes and separation elements 7, the sides of the hexagons, separating one hole from another.

Figure 3 shows a cross-section through a first embodiment of the grass-laden panel 1. In this embodiment the growth holes are through holes. The earthy material is disposed on the upper surface 3 and in the growth holes 4, 5, 6. The branching roots 9 expand into the earthy material 8, in particular inside the growth holes, to compact it. The branching roots 9 also extend from one growth hole to another to anchor the earthy material 8 and natural grass growing therein to the blanket 2. This anchoring action is particularly effective if the branching roots 9 extend from one growth hole to another by passing below the separation elements 7. The earthy material 8 can be soil or sand or material of any natural or synthetic type, able to grow natural grass. It can be rich in important nutrient elements for proper growth of the natural grass, or these nutrient elements can be added later.

The blanket growth holes can be of different shapes and dimensions, for example they can be circular holes of between a minimum of 1 mm and a maximum of 15 cm diameter. Preferably the dimensions are between 10 mm and 20 mm. In the case of holes of non-circular cross-section, these dimensions are to be considered as referring to the circumscribed circle. For example, in the case of growth holes of hexagonal cross-section, each of these is inscribed within a circle preferably of dimensions between 10 mm and 20 mm. The growth holes can also be provided internally with protuberances (not shown for simplicity) to act as anchorages for the branching roots. The growth holes can also be of irregular shape, inclined or helical, to be able to provide better anchorage for earthy material and for the branching roots. These protuberances or complex shapes of the growth holes can be obtained by two or more superposed blankets with offset holes preferably of irregular shape, to form the anchoring protuberances. The generic term "anchorage" means either a protuberance inside the growth hole, or an undercut, or a separation element 7 between one growth hole and another if the growth holes are through holes and the roots can hence pass below this separation element 7 to anchor the natural grass 10 to the blanket 2.

The blanket 2 of the grass-laden panel 1 can be produced of different materials, for example polystyrene, polyurethane, an EPDM expanded rubber, a closed cell expanded polyurethane of commercial name EVA, polypropylene, high density polyethylene, hard or soft plastic, recycled or non-recycled rubber.

Particularly suitable is a closed cell crosslinked expanded polyethylene material in accordance with EP 1 247 632, in which pieces of thermoplastic material are heated and pressed with cooled plates to obtain partial fusion of the various pieces and their connection together to form a low cost panel of suitable characteristics for a playing field.

To be able to more easily transport the grass-laden panel by rolling it up, the blanket is preferably made of flexible material.

Besides being present in the growth holes 4, 5, 6, the earthy material 8 can also completely cover the upper surface 3 of the support 2, to hence form a grass-laden panel with natural grass which when viewed from above is indistinguishable from an actual lawn portion.

Through growth holes, such as those of the first embodiment, allow rain water to drain downwards so that it does not accumulate on the upper surface of the panel 1 and drench it.

On the lower surface 13 of the blanket 2 a base layer (not shown for simplicity) can be present which is permeable to air and water, but able to retain the earthy material 8, to enable water to drain and the soil to breathe, while preventing downward dispersion of the earthy material 8. This base layer can be glued on or simply rested on. It can also consist of a mesh with sufficiently dense apertures or a layer of "non-woven fabric", i.e. an agglomeration of synthetic or natural fibres which are not regularly woven, but are sufficiently interlaced to present a sufficient strength.

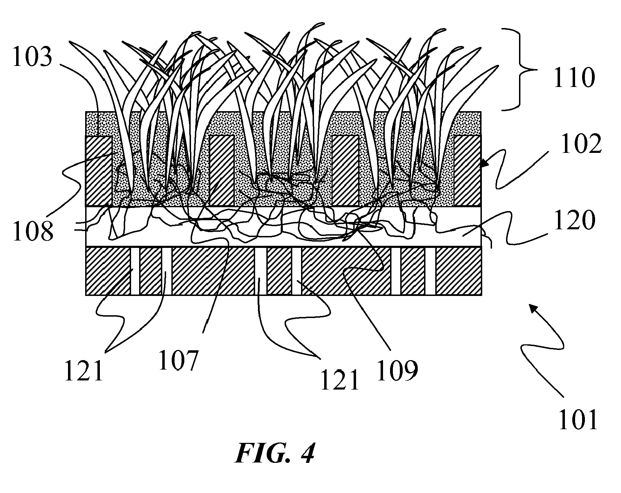

Figure 4 shows a second embodiment of the grass-laden panel. In this figure, elements corresponding to the first embodiment carry the same reference numeral plus 100. The grass-laden panel 101 comprises a blanket 102 with transverse growth holes and longitudinal holes 120 substantially parallel to the upper surface 103 of the blanket 102, which connect two or more transverse growth holes together. The longitudinal holes 120 present transverse drainage holes 121 for draining water. In this manner the earthy material 108 in the growth holes is not in direct contact with the surface on which the blanket rests, but the rain water is free to descend firstly through the growth holes and then through the drainage holes, without accumulating on the upper surface of the grass-laden panel. The longitudinal holes 120 establish a connection between the growth holes to hence enable the branching roots 109 to propagate from one growth hole to another by passing below the separation elements 107, to anchor in this manner the earthy material 108 and the natural grass 110 growing therein to the blanket 102. The longitudinal holes 120 are substantially parallel to the upper surface 103 and can intersect each other.

In this embodiment the growth holes can also present anchoring protuberances to facilitate anchoring of the branching roots 109 of the natural grass 110 to the blanket 102, even without passing below the separation elements 107.

The growth holes of the perforated blanket 2, 102 of the first or second embodiment are filled with earthy material 8, 108. The grass seeds are inserted into the earthy material 8, 108 and suitably watered to cause them to grow. Nutrient and fertilizer substances can be added to the earthy material 8, 108. The natural grass 10, 110 grows and develops normally. Its roots branch both inside the growth hole and from one growth hole to another by passing below the separation elements 7, 107. In this manner the branching roots 9, 109 consolidate the earthy material particularly within the growth holes, and anchor it to the blanket 2, 102.

The grass-laden panel produced in this manner can be rolled up, transported and installed for example for forming a natural grass playing field or a garden, including a hanging garden. The natural grass is watered and grows normally. Because of this it must also be trimmed as necessary and treated with care, to obtain an attractive grass lawn with natural grass.

As the grass-laden panel presents a core comprising a flexible blanket of synthetic material, the grass-laden panel can be produced and made ready in a nursery as in the case of plants in general, then sold to the customer and installed only when the natural grass has reached an optimum growth level.

An advantageous characteristic of the grass-laden panel of the invention is that the grass is well anchored to the support, so preventing easy detachment of turf lumps.

Blankets of a greater or lesser degree of softness can be used to obtain surfaces for the grass-laden panel which have different hardness characteristics, for example suitable for application to different types of playing area, with different ball bouncing requirements.

## Claims

1. A grass-laden panel (1, 101) comprising a support (2) with an upper surface (3) presenting a plurality of growth holes (4, 5, 6) divided by separation elements (7), said holes containing earthy material (8) and branching roots (9) of natural grass (10) which is arranged to sprout from the upper surface (3) of the support (2).

2. A grass-laden panel (1) as claimed in claim 1, **characterised in that** said support comprises a blanket (2).

3. A grass-laden panel (1) as claimed in claim 1, **characterised in that** said support (2) presents anchorages (7) for anchoring the branching roots (9) of the natural grass (10) which extend within said growth holes (4, 5, 6).

4. A grass-laden panel (1) as claimed in the preceding claim, **characterised in that** said branching roots (9) pass through the earthy material (8) with at least some of them extending from one growth hole to another by passing under said separation elements (7), which act as anchorages.

5. A grass-laden panel (1) as claimed in claim 1, **characterised in that** said support (2) is flexible.

6. A grass-laden panel (1) as claimed in claim 1, **characterised in that** said growth holes (4, 5, 6) are though holes.

7. A grass-laden panel (101) as claimed in claim 1, **characterised by** comprising longitudinal holes (120) substantially parallel to the upper surface (103) of the support, to connect together two or more growth holes.

8. A grass-laden panel (101) as claimed in the preceding claim, **characterised in that** said longitudinal holes (120) present drainage holes (121).

9. A grass-laden panel (1) as claimed in claim 1, **characterised in that** said growth holes (4, 5, 6) on the upper surface (3) are inscribed within a circle the diameter of which is between 1 mm and 15 cm.

10. A grass-laden panel (1) as claimed in the preceding claim, **characterised in that** said growth holes (4, 5, 6) on the upper surface (3) are inscribed within a circle the diameter of which is between 10 mm and 20 mm.

11. A grass-laden panel (1) as claimed in claim 1, **characterised in that** said growth holes (4, 5, 6) present internal protuberances to offer improved anchoring for the branching roots (9).

12. A grass-laden panel (1) as claimed in claim 1, **characterised in that** said growth holes (4, 5, 6) are of helical shape.

13. A grass-laden panel (1, 101) as claimed in claim 1, **characterised in that** said support (2) is of plastic material.

14. A grass-laden panel (1, 101) as claimed in the preceding claim, **characterised in that** said support (2) is of high density polyethylene.

15. A grass-laden panel (1, 101) as claimed in claim 5, **characterised in that** said support (2) is of rubbery material.

16. A grass-laden panel (1, 101) as claimed in claim 1, **characterised in that** earthy material (8) covers the upper surface (3) of the support (2).

17. A grass-laden panel (1, 101) as claimed in claim 1, **characterised in that** a base layer permeable to air and water is disposed on the lower surface (13) of the support (2) to prevent downward dispersion of the earthy material (8).
